# EUROPEAN PATENT APPLICATION

(11) **EP 0 992 899 A2**
(43) Date of publication of application: **12.04.2000**
(21) Application number: 99307805.4
(22) Date of filing: 04.10.1999
(51) Int. Cl.: G06F 9/44

(54) **Table format programming tool**

(30) Priority: 09.10.1998 US 169462
(71) Applicant: LAM, Peter Ar-Fu, Torrance, CA 90501 (US)
(72) Inventor: LAM, Peter Ar-Fu, Torrance, CA 90501 (US)
(74) Representative: Molyneaux, Martyn William

(57) **Abstract**

A table format programming tool suitable for use with multiple languages and for downloading through internet and network environments provides an optional table (103, 200) to define custom expressions, an optional table (105, 260) to specify multitask applications, an optional table (104, 230) to specify a printing style of labels and a table of configuration states (113) which interact with a table of paths (116). An optional qualifier table (112) defines qualifying conditions of an input configuration state. Hardware embodiments includes a coprocessor to handle the table format programming process and relieve the main processor for other applications. During programming, programmers provide user-defined labels to describe the function and action desired. The labels are then further developed in additional groups of program.

## Description

The present invention relates to a programming tool. In particular it relates to a programming tool using different kinds of tables to achieve a programming function and to facilitate control of program flow.

The programming tool of the present invention makes extensive use of tables to enable a programming process to be easily understood by third parties. Thus, the improvements provided enhance the efficiency of programming and reduce the likelihood of the presence of program bugs or structural errors. In addition, the cost of training required for a programmer to learn the programming method is minimal. The resulting programs composed with the invented tool also are easy to read and to be maintained by any programmer.

Traditional programming languages define a set of programming instructions and programming rules. Most commonly used programming languages such as BASIC, C and JAVA are written in the form of a top-down line by line listing written in sequence. In many applications, hundreds of pages of code are written to describe a required job function. It is extremely difficult for a programmer to follow the logical flow of a program from such a listing. The size of programs therefore causes difficulties in subsequent maintenance work. Besides, multiple pages of programs filled with sequential lines of codes are very difficult to understand by another programmer who has not previously been involved in the job. Although many compact instructions or programming symbols have been invented, the size of many programs written in different programming languages are still too large to be easily interpreted by a professional programmer. In many situations, the author of a program also finds difficulty in understanding his or her own program after an extended period of time. The requirements of a compact instruction set and readability contradict each other. It is highly desirable to have a programming tool which provides a compact program size and is also simple to understand by other programmers and preferably by inexperienced people as well.

Every time a new programming language is invented, coding symbols and instruction set are designed to describe programming functions. Rules are also designed to restrict how the programming instructions are to be used in order to make a program written with the language interpretable and executable by a computing device. In many situations, the instruction manual describing a programming language is over two inches thick in order to document all these instruction sets and describe the programming rules. It is not unusual for months of training effort to be required in order for a programmer to learn the whole instruction set and understand all the programming rules of a new programming language. More programming tricks are usually learned through subsequent years of programming experience.

Although many programming languages allow a program to include conditional jumps, call functions or branches to other segments of the program, according to the structural requirements of the job, the logic flow of these interactive branching activities inside the program structure is extremely difficult to interpret by a professional programmer even although a great amount of time may have been spent in reading the program.

There are various kinds of programming languages available in the market, each dedicated to a certain kind of application, or designed according to a particular programming environment. Many other programming languages are designed to program specific hardware configurations or systems. Often, different programming languages use different symbols or even expression strings to represent an instruction describing a similar function. A programmer may often be confused which symbols or expressions to use, after learning many different languages, each with different formats and instruction expressions. It is highly desirable to have a new programming tool enabling a programmer to overcome this difficulty.

Because most programming languages are designed optimally to interpret the programming function specific to their application environment, many programming jobs which include a large variety of functions are best dissected into modules, with different modules written in different languages, according to their specific requirements. It is therefore highly desirable to have a special programming tool suitable for managing the integration of program segments written in different languages. With the popularity of internet, it is also highly desirable to have a generic programming tool suitable for coordinating programming modules of different format to form a combined program, which is suitable for downloading the program to individual computers remote from the host computer. For this type of application, the program must be of compact nature and be able to self-reconfigure according to the nature of the various local computers.

The applicant's issued US Patent 5,867,818 first introduced a primitive table format method for programming a hardware controller chip having multiple input and output terminals. The present application is directed to various improvements achieved from further intense research since this primitive structure was invented.

According to the present invention, there is provided a programming tool as claimed in claim 1.

The present invention is directed to the inventive steps of providing the architecture of a generic model to program a computing device making use of the concept of table format programming. One objective of the invention is to structure the generic model such that it is simple enough to be applied by ordinary people without receiving intensive professional training. A further objective is to establish a programming model such that any program written with this format can be easily understood by another person without having extensive experience in the language or close involvement with the writing of the program. Another objective of the invention is to establish a programming model that clearly identifies the structure of a programming job through the coding process, therefore enabling the program to be maintained with minimal effort. As a result, the cost of training to learn a programming language, the time cost to write a program, the time cost to debug a program and future maintenance costs to modify the program can be reduced. With such a user-friendly programming structure, it is expected that fewer program bugs will be included during the programming process and therefore the time cost required for debugging can also be reduced.

Another further objective of the invention is to establish a structural programming format which is able to express a clear skeletal structure of the job while enabling the individual specific functional program modules to be selectably programmed with any language most suitable for that function. This approach further enhances the efficiency of programming and reduces the amount of future maintenance work required.

The programming method of the present invention comprises the steps of filling up two or more tables with program data. Various types of tables are designed to perform different supporting functions. A table is defined as a matrix of data. A table may have one or more dimensions. A table matrix is typically represented by m row and n columns where m and n are integers equal to or greater than one. Each element of the table may be represented by a label, a single expression or a sequence of expressions.

In an embodiment of the invention, the programming method uses the concept of a task table which comprises a table of data formed to control the activity of multiple tasks. More than one task table may be present in a program, each table comprising one or more task states. Whenever a task state is specified in the programming process, the situation and/or activities of the tasks specified are defined. Further task priority information may be included in the activity task table or provided in another separate table for the computing device to assign or handle priority while running multiple tasks with the shared resources of the computing device.

In the fundamental aspect of the invention, a table is formed to define one or more configuration states which may include input and/or output information. When an input qualifying condition of a configuration state is satisfied, it will cause a response of a specific sequence of actions represented in another table called an event table or path table. At least one configuration state is to be specified as the active state. This early version of table format programming method designed for micro-controllers was described in applicant's issued Patents US-5,867,818 and GB-2306024. The present application is directed to various enhancements of the fundamental concept resulting from years of intense research to improve the servicing scope of the technology.

In another extended embodiment of the invention, a further table is formed to define the qualifying conditions required to trigger a qualifier configuration state. In this embodiment, the concept of virtual qualifier is first introduced. A virtual qualifier is defined as any qualifying condition not coming from a physical hardware terminal. Virtual qualifier is important as it includes the consideration of a result which comes from a single software instruction or from a whole software program. Virtual qualifier may also include hardware internal to a computing device such as overflow of an internal register. It may be triggered by the result of an internal software or hardware interrupt, generation of a sign, polarity signal, signal indicating the presence of data from another system or the presence of a flag. Another commonly used example of virtual qualifier is the output of a mouse driver program which specifies the direction of motion of a pointer according to the movement of a mouse.

In another embodiment of the invention, a table is formed to define the output configuration of an output state. The output state may be a signal to be sent out through a physical hardware terminal or the configuration of a virtual computing output state. A virtual computing output state is defined to be any output state which does not describe the activity of a hardware terminal. An example of a virtual computing output state is the triggering of a software program to start running, or to set particular conditional parameters to control software, or for the software to perform some specific function.

When a qualified trigger is obtained, a responsive action is executed. A path table or event table is a table grouping one or more responsive actions. A path may represent an action or a sequence of actions to be performed when a qualified condition is received. A path may be initiated by another path. This responsive action or sequence of actions is named a path equation. The interactive composition of state tables and the path table is analogous to event structure illustrated with state diagrams. Besides, table format programming offers a program presentation which is more user-friendly. In order to better present the descriptive presentation of the program flow, each path in the path table can be assigned a meaningful label according to the wish of the programmer. A meaningfully named label can be assigned to a configuration state or a path. All these labels help the programmer or other people understand the action and logic flow of the written program. This is an important contribution of the present invention to help interpret a composed program and reduce future maintenance costs.

Another table which can be included in the invented programming process directs an output condition in an output state to a specific sequence of operation. This sequence can be represented by another table to simplify the programming process.

A further type of table introduced in the present invention enables the programmer to change the expression and/or syntax of the table format programming language into any other expressions or symbols desired. Further tables which may be included define one or more sets of library or external programs required to support the programming job.

With the support of the table format programming tool, the traditional practice of programming is significantly changed. When the structural programming job is started, the programmer interactively describes the skeletal structure of the program flow with tables of states and paths. The programmer is free to assign meaningful labels or names to represent each configuration state and path. The meaningful names of each state configuration and path equation help to describe the flow of the program. When an action to be included in a path is too complicated to be represented by the available instruction set, or the action is better described with a program module in another language, the programmer is free to assign a meaningful label to represent this desired action. At the end of the programming process, the programmer should furnish executable program modules or expressions for each of the undefined labels assigned. In this way program modules are formed by interactively organizing multiple groups of tables. A program module having at least a state table and a path table is named a program group or table group. Each program group can be assigned another meaningful label to describe the function of the program module. This label can then be utilized in another program module or group for pointing to this program group when a jump or function call is required. The very first program group to be executed when the program is started by default is named the "main" group for convenience. Inside each group, there should be a "start" up path to serve as the starting path when the program is initialized or starts from default. In order to improve programming efficiency, supporting program modules may be composed with a desirable language different from the language of the table format programming method used in the main group. Many different languages may be utilized in the same program. It is highly desirable to design-in features in the table format programming method to pass parameters and variables between program modules of different languages. In a preferred embodiment, a table format program is designed to interface with different programming languages and to serve as a bridge to communicate between program modules written in different languages. The program eventually composed can then be compiled or translated into a specific desired programming language, including Assembly Language or even machine code digital data. It can be observed that the table format programming language significantly changes the concept and practice of writing a program. A program is written in a logical and well-structured manner. By making use of the freedom to assign meaningful labels, the program flow is as smooth as composing a composition to describe the programming job. Each label is then linked with an external program module which can be written in any language desired. From time to time, multiple levels of program groups or modules can be arranged. Because the program size of each table format group is usually quite small and the program is well structured, the aforementioned advantages of table format programming can be easily achieved.

Freedom to assign or equate labels and instruction keywords is very important for table format programming to support a multiple languages programming platform. This is because different languages may make use of different syntax for the same kind of application. The freedom of labeling and equating features enables the user to unify the labels and syntax according to his/her requirements.

The nature of table format programming makes it a perfect supporting tool to enhance the programming structure of another language. For example, the compiler of a high level language can be modified to include just sufficient of the table format programming function to provide a skeletal structural of a program written in that language.

Since the method of table format programming is unique and independent of the third language programs it coordinates, the program management job can be simplified by providing a simple table format coprocessor which handles almost all the table format programming tasks. This structure of multiple processors will relieve the workload of the main processor and allow it to focus on handling the regular jobs and improve the overall system performance, particularly in a multitasking environment. The table format coprocessor may be a processor located outside the main processor or may coexist with the main processor within the same integrated circuit chip. When table format programming is applied to microprocessors or micro controllers, the compiled or encoded table format program becomes digital data which is stored in memory such as ROM, EPROM or flash memory for the execution of the microprocessor or micro controller. A printed circuit assembly comprising the processor and memory storing the compiled representation of the table format program is then used to build up a finished commercial product for point of sale distribution.

In accordance with the structural organization of the table format programming, it is particularly suitable for event driven applications such as programming under a windows environment, web site, interactive game or control programming. An important characteristic of table format utilized in event driven programming is that it is a highly compressed format to represent a program. Most table format programs for small jobs are less than one page long. Experimental results demonstrate that one page in table format programming may represent eight pages of assembly language program, depending on the complexity of the available instruction set. Considerable code size saving can also be achieved when compared with many high level languages. This feature makes table format programming economical to use as a media to communicate through a limited bandwidth communication channel; such as between a host system communicating with numerous local computers in network or internet applications. It should be noted that a network, communication link or communication channel refers to any means connecting two computing devices together, including serial port, parallel port, USB port, internet, intranet, extranet, LAN, ISDN, DSL and any communication means interfacing two computing devices. The devices on the network may be connected by wired, wireless or mixed mode connection. In internet programming, a further step is required to evaluate the system configuration of a user computer and then adjust the program settings before a downloaded program can be executed by the local computer. The configuration of many computer to human interface devices such as monitor, graphic card, sound generation device, pointer control, game controller control are among the configuration settings to be defined. Because the internet communication line is usually the bottle neck of a system, it is recommended that the compiling job for table format programming is performed at the local computer level in order to make use of the advantages of the compressed codes of table format programming.

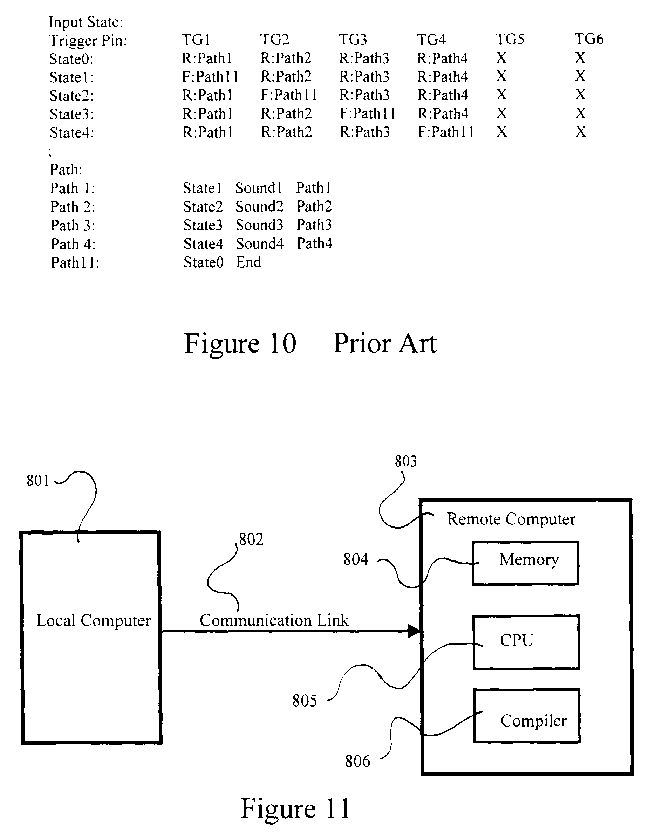

Figure 11 is a block diagram showing how a local computer 801 is connected with a remote computer 803. In many applications, a table format program is stored in the local computer. It is downloaded to a remote computer through a communication link 802 upon request. The table format program can be stored in the memory means 804 of the remote computer or immediately compiled by the remote computer. The compiled file is an executable file to perform some predefined work at the remote computer. This executable file can also be stored in the memory means 804 of the remote computer.

When a compiler is designed to handle table format programming, it is highly recommended to make use of keywords to identify the nature and location of each table, and the corresponding group respectively. Task, group, qualifier, state, path and library are exemplary keywords used to identify the functional tables in the illustrated embodiments. It should be noted that the compiling, translating, interpreting or transforming of the table format programming method includes the process of converting the table format program into any other program format such as machine language or any higher level language. The conversion process can be performed by a compiler program written in another programming language or supported by an executable table format program as well. For the convenience of debugging, a debug tool may be configured to reference a particular location of the table format program and the corresponding location of the program translated into another programming language. For example, a user can simply request the transmission of a data chain in a table format program. After the table format program is translated into Assembly Language, the user is able to locate the transmission process in the Assembly code listing and then modify the transmission characteristics of the UART as desired. This debug tool is very helpful when it is preferred to tune a particular process in the environment of another programming language.

The concept of task table effectively extends the convenience of table format programming to a multitask environment as well.

The novel features of the invention are set forth with particularity in the appended claims.

The definition of computing device refers to any device having computing capabilities, including computers, micro controllers, microprocessors, printed circuit assemblies comprising micro controllers or microprocessors. In addition to computers, other supporting hardware required to support the invented technology are the debugging hardware, communication links such as cables, communications ports, hubs and networks as defined in the specification. The table format program may be displayed on display terminals, printed on printers, and encoded as digital data. The encoded digital data representing the table format program may be stored in any memory device such as RAM, ROM, disk drive, and CD ROM. The technical terms, keywords and labels used in the embodiments are exemplary and numerous modifications, specification variations and table format rearrangements can be readily envisioned to achieve an equivalent result, all of which are intended to be embraced within the scope of the appended claims. The invention will be best understood from the following description when read in conjunction with the accompanying drawings.

In order to fully use the advantages of the invented technology, users are required carefully to prepare the pre-programming activities. Typical pre-programming activities involve the analysis of the program job specification and the reduction of the project into a table format coherent state diagram. The introduction of table format program groups, while enhancing the clarity of program structure, requires the user clearly to identify and define the specific functional modules of the project before starting to apply the programming technology. Because of the merits of the table format programming method, another interface specification procedure is required to document the interfacing relationship of table format programming groups or modules in order to allocate the programming job to a team of programmers. In the application of network communication or downloading, the pre-computer activities involve sending the table format program to a remote computer through a communication link or network.

The in-process computer activity is performed by the table format compiler which translates the table format program into codes executable by a local computer, a target microcontroller, or a remote computer. The post-computer activity is usually a code executable by the target computer or microcontroller. This executable code can be further run by the computer or microcontroller to perform the function according to the original programming specification. The compiled executable code is usually stored in memory means defined by RAM, ROM, any programmable no-volatile memory or any other storage devices commercially available. In the case of microcontrollers to be used in consumer products, the memory means storing the compiled executable file is usually located in the article of sale rather than in the compiling computer. In this situation, the compiling computer simply acts as a development system or a program supplier for a remote computing device.

### BRIEF DESCRIPTION OF DRAWINGS

Figure 1 illustrates the structure of an embodiment of a table format program.

Figure 2A is a table defining the table format expressions to be equated to user defined expressions.

Figure 2B demonstrated how a name is assigned to the table of Figure 2A.

Figure 3 is a table formed to define different printing styles of words to be identified.

Figure 4 is an embodiment showing different task states of a task table.

Figure 5A is an embodiment showing multiple task tables in a program.

Figure 5B is a numbered representation of Figure 5A.

Figure 6A is a program showing an embodiment of a table format program group.

Figure 6B is a further development of the embodiment of Figure 6A.

Figure 7 is a table showing a list of files to be included.

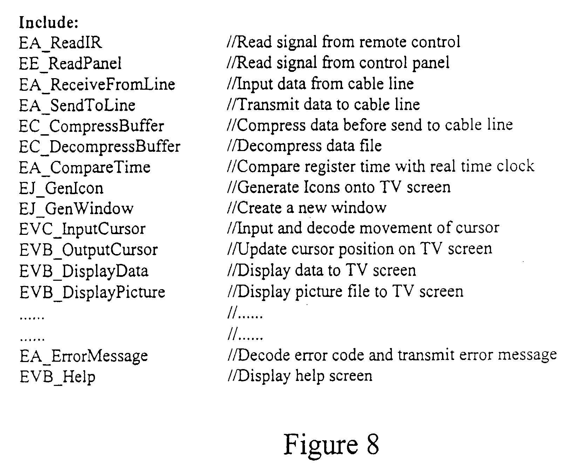

Figure 8 is a further development of the table of Figure 7.

Figure 9 demonstrates some proposed lengthy and descriptive instruction commands to be used in table format programming.

Figure 10 demonstrates a prior art fundamental table format program suitable for use in voice generating microcontrollers.

Figure 11 is a block diagram showing a local computer downloading a table format program to a remote computer through a communication link.

Throughout the following detailed description, similar reference characters refer to similar elements in all figures of the drawings.

The initial attention is directed to Figure 10 for a review of fundamental table format programming disclosed in issued US Patent 5,867,818. The table format program consists of two parts, a state table and a path table to program a sound generating programmable controller. In the second line of the state table, the order of the corresponding input trigger pins of the controllers is defined. Each of StateO to State 4 defines a possible trigger state of the controller. For example, the R:Pathl element corresponds to TG1 of StateO indicates that if a rising edge (represented by "R") is detected, the path named Path1 is executed. In Pathl, the active state is changed to Statel, then a sound named "Soundl" is generated. After the sound is completed, the control is looped back to Pathland another round of sound generating sequence is started until a falling edge trigger (denoted by F:Path 11) is received by TG1 during the Statel state. This example program demonstrates a "level hold" function of TG1 to TG4. That is, a sound is generated when one of TG1 to TG4 is compressed. The sound will be looped until the trigger button is released.

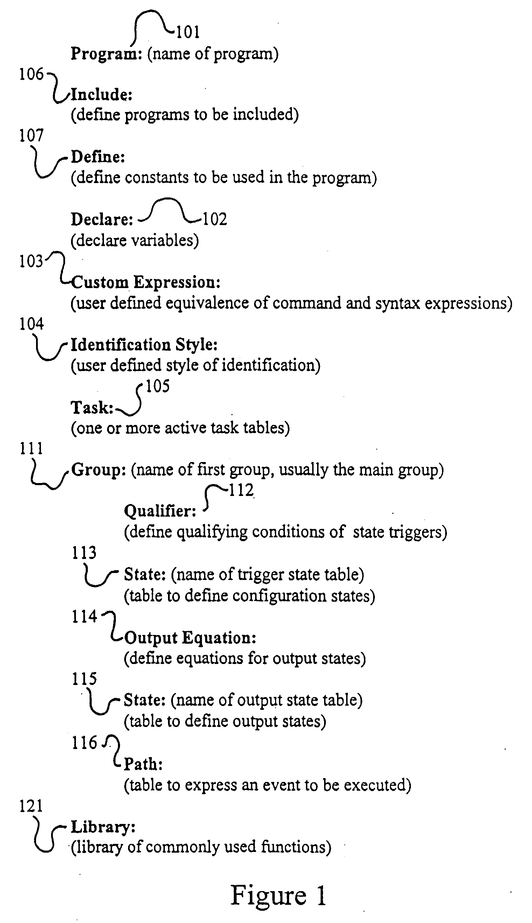

Attention is then directed to Figure 1 which depicts the structure of a table selected in an embodiment of an improved table format program. The keyword 101 indicates the start of a program. The name of the program can be assigned by the programmer in a position next to the keyword. Keyword 106 indicates the start of a table listing program modules to be included. Keyword 107 indicates the start of a table defining constants to be used in the program. Keyword 102 declares the variables to be used in the program. Keyword 103 is a table listing the user-defined equivalents of commands and syntax expressions. In order for the program keyword to be distinguishable, the programmer may define the keyword printing style in a table starting with keyword 104. All the above features provide the preparation work of the table format program. The task table 105 provides one or more task states to define which tasks are to be activated, paused or terminated. Program group 111 comprises an optional qualifier table 112, at least one state table 113 and one path table 116. The actual program job involves interactively composing the content of the state table and the path table. Additional output state table 115 and output equation table 114 can be added to further define the output state(s) of the program. Finally, a library table 121 can be added to furnish commonly used command strings and routines. It should be noted that all the tables described above are not required to be listed in sequential order and many tables may be established to provide optional features. In addition, a program may contain multiple tables of a similar type as in the situation of the task tables and the state tables. Names of the tables can be freely assigned following the colon sign of the keywords to better present the meaning of the program. Keywords used in table format programming may have more than one word and may refer to instructions, specific variables, constants and hardware elements of the system. It should be noted that the keywords provided are exemplary and alternative names of keywords can be used. Besides, some reasonable variation of the scope of the tables is always possible and is considered to be within the scope claimed in this application.

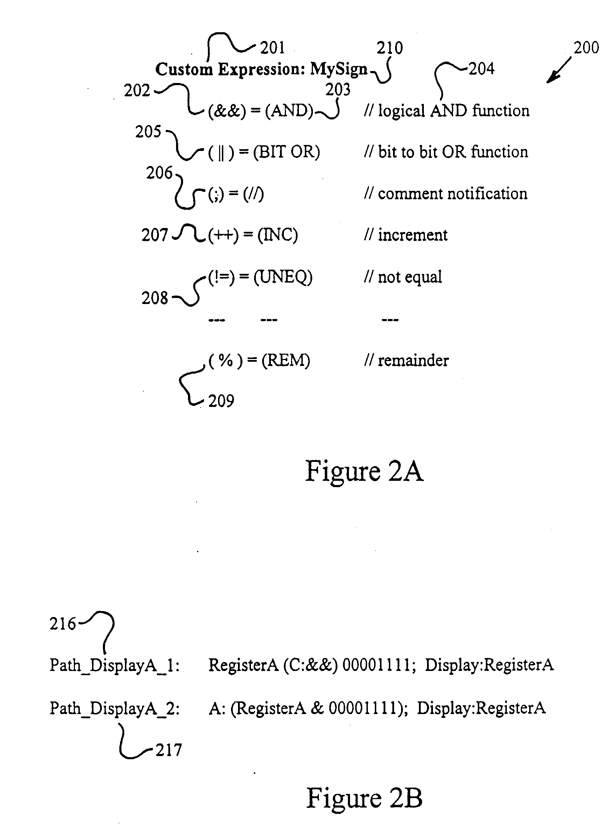

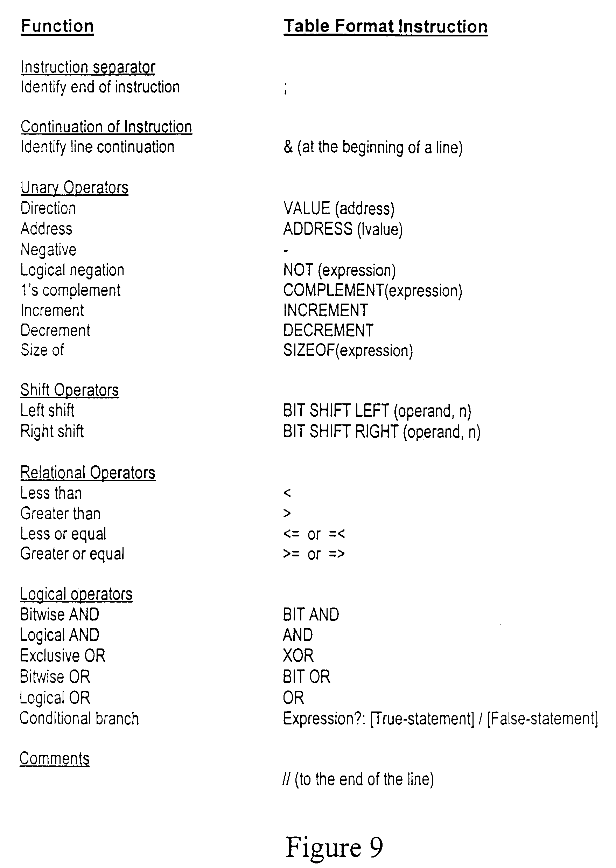

With reference now to Figure 2A, the table 200 represents a detailed example of the table 103 of Figure 1. The keyword 201 "Custom Expression" represents the start of this functional table which lists the user-defined equivalents of official table format expressions. For example, assuming an official table format expression for the logical AND function is "AND" of 203; a programmer who prefers C language programming is free to substitute the table format command "AND" by "&&", 202 as used by the C language instruction set. Custom expressions are applicable to any word or symbol set used by the language or system, such as instruction commands, symbols and system keywords. It is recommended that a comment 204 is provided every time an alternative expression is defined. The advantage of this function is to provide a personalized support to the programmer so that familiar notations or expressions can always be used. However, when the composed program is printed, it is preferable for the compiler or editor to print out the program listing with the official expressions so as to facilitate the reading of the program listing by other people. A similar application concept can be extended to a program editor. The official expression can be displayed as soon as the user-defined expression is keyed in. A switching function between the predetermined official and user-defined expressions is also recommended, so the user can have a choice of the program being displayed or printed in the official form or custom form. With this custom expression defining feature, meaningful lengthy expression names can be used to make the program listing more readable by other people while keeping the advantage for the programmer of using abbreviated expressions or short length symbols to represent instruction commands and syntax. Groups of official syntax and the corresponding group of user-defined equivalent syntax and labels can be built in the table format program with the commonly known table look up method. A typical application example is illustrated in Figure 9, where some lengthy and descriptive instruction set is shown. The shift operators "BIT SHIFT LEFT" and "BIT SHIFT RIGHT" clearly describe the operation to be performed. However, these instructions are too long and not welcome by skilled programmers. The programmer may then equate the "BIT SHIFT LEFT" instruction to the concise but less descriptive "<<" instruction used in the C language. The long instruction names make the program easily understood but too clumsy for skilled programmers. The "Custom Expression" table effectively resolves this concern while maintaining the advantages of the long instruction expressions.

Because the range of symbols available on the QWERTY keyboard is very limited, it is difficult to find sufficient meaningful symbols from the keyboard to compose a new programming method, like the table format programming method, without conflicting with traditional use of notations and symbols of some other popular languages. The custom expression table provides a way to ease this problem by enabling users to reconfigure instructions and symbols according to their preference.

Element 210 illustrates how a name "MySign" is assigned to the "Customer Expression" table. A name is required particularly when more than one set of "Customer Expression" tables are provided to enable more than one user to manipulate or read the program. For example, in addition to the table "MySign" included in the program, another custom table named as "JohnsSign" can be added in the same program. If John wants to read the program, he simply sets the "JohnsSign" expression table as the default displaying table, and John will see the program displayed in his favored format. The novel feature of this table is to enable every user to include their own set of custom defined expressions so as to facilitate converting or editing the program in their preferred format.

Although the table illustrated in Figure 2A provides a method to reconfigure keywords and expressions, it is desirable to have a simple method to provide alternative expression or commands of another language for a small job. This can be achieved by specifying a symbol representing a specific language in front of expressions specified by that language. Figure 2B illustrates how the content of Register A is to be masked with the binary number 00001111 so as to obtain the last four bits of the Register A content, and then proceed to display this number. The expression 216 provides the element "(C:&&)" to indicate that the "&&" instruction is an instruction of the "C" language. The masked value of Register A is then displayed using a predefined "Display" command. Alternatively, an expression performing the same function may be obtained by using the "&" instruction of the assembly language of a microprocessor. The sign "A: ( )" is an expression to indicate the operation included in the brackets is written in assembly language. These two methods, although convenient, are not as powerful as the custom expression table of Figure 2A which personalized the expressions of a whole program to be converted or to be personalized.

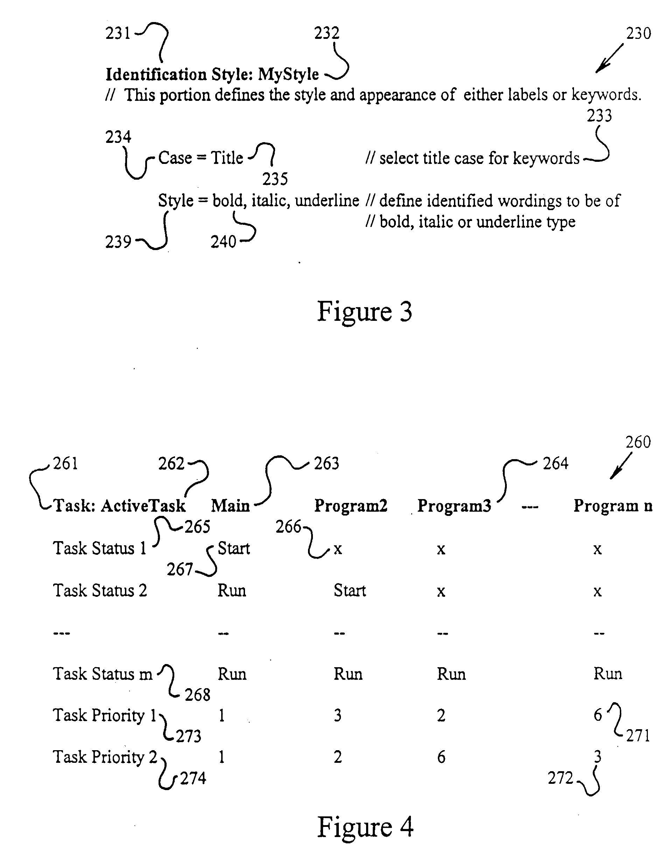

Since table format programming involves a large number of discrete user-assigned labels, and these labels are scattered around the program and mixed with keywords, expressions, external programs and instruction commands, it is difficult for a user to read the program, since the user is unable to distinguish a user-assigned label from other keywords and instruction commands. It is therefore preferable to provide means to identify these labels to make the program more user-friendly. Figure 3 demonstrates a table of the program which controls how the user-assigned labels are to be presented. The table element 234 provides the selection of case. Typical cases available for selection are title case, all upper case and all lower case. The table element 239 indicates the choice of the letter style. Typical choices available are bold, italic and underline. It should be noted that both elements 234 and 239 offer excellent identification for all kinds of display device including black and white printers. Keyword 231 indicates the start of the identification style definition section of the program. It is recommended that a user-assigned name is placed after the keyword 231 to indicate that the following setting is the preferred setting of a particular person. Multiple identification style tables assigned according to the preference of different people can be included in the program and each table assigned a name as represented by element 232. A selection of one of the identification style tables as active, sets the printing style to suit the preference of the particular user reading the program.

In order to present well-structured program flow in a multitasking environment, a task control table (hereafter referred to as a task table) is introduced in the embodiment demonstrated in Figure 4. Element 261 is a keyword to identify a task table. Element 262 is a label assigned to name the task table. This name is provided in order to differentiate from other task tables if two or more task tables are required. Elements 263, 264 represent different tasks or programs which may be run under the control of the task table. Each row 265, 268 of the table represents a task state. In each task state a task condition is assigned to represent the condition of each task. Listed below are some examples of expressions to describe a task condition:
Start: indicates that irrespective of whether the task or program is running, paused or has been terminated, the program is restarted from the beginning;
Continue: indicates that if a task had already been started, then it continues to run;
Pause: indicates the task or program is to be paused,
Run: indicates that if a task has not yet been started, it is then started; if a task or program is running, it continues to run; if a task is paused, the running of the task is resumed;
X: indicates the running of the task is terminated.

In the row 265, the task "Task Status 1" instructs the "Main" program to start running while programs 2 to n are in terminated condition. In the task state 268, all the programs are instructed to run. It should be noted that for each task table, only one task state is active at a time. In systems with limited resources, it is important to assign priority to the active task running. The task states 273 and 274 assign priority to the tasks. It should be noted that a separate table can be established just to describe priority assigned to the tasks. Because the title elements of each element of the activity task table and priority task table are identical, it is possible to combine the two types of task tables into one as shown in Figure 4. In this situation, two active task states are required, one for the task activity status and one for the task priority assignment.

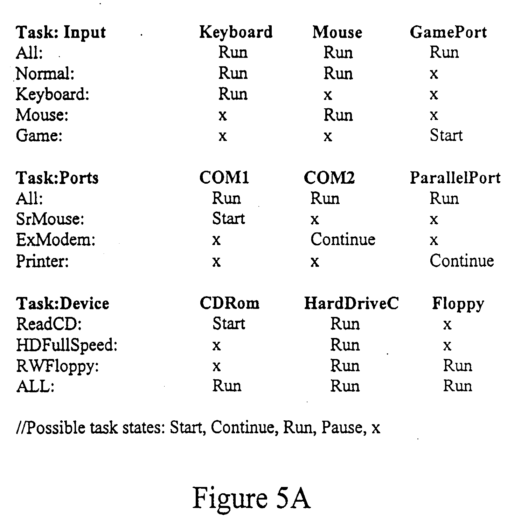

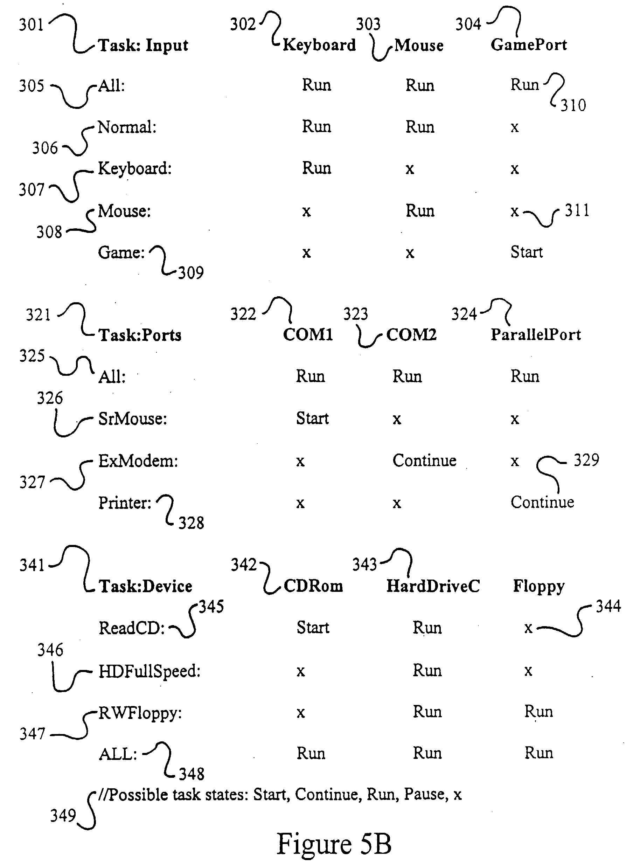

Figure 5A illustrates a real world application example to demonstrate the concept of the task table. Figure 5B is a numbered illustration of Figure 5A. This example comprises three task tables. The first task table is named as "Input" as shown in element 301. It comprises three programs named "Keyboard" 302, "Mouse" 303 and "Gameport" 304. "Keyboard" is a program scanning the keys of a keyboard. "Mouse" is a program decoding the motion of a mouse while "GamePort" inputs the trigger signals obtained from a game port. In the task state 305 named "All", all the three programs are running to enable the computing device to be responsive to all three input devices. In the task state 306 named "Normal" only the keyboard and mouse are enabled. The game port is not used so as to improve the servicing efficiency of the computing device. When in the game playing mode, the task state 309 named "Game" becomes the only active program or task. The keyboard and mouse are not used so as to let the computing device focus all its resources on servicing the game play. The second task table is a table named "Ports" 321 which controls the serial and parallel ports of the computing device. The third task table is named "Device", as shown in element 341. It controls the driver programs to operate the "CDRom" 342, the "HardDriveC" 343, and the floppy disk drive. When the task state "ReadCD" 345 is activated, the CD Rom and the Hard Drive C driver programs are activated but the floppy disc driver program is terminated. In the mode demanding full running speed of the hard drive, the task state "HDFullSpeed" 346 becomes the active task state where the hard drive becomes the only running device. According to this application example, it is recommended to group only similar nature or interrelated tasks to form a common task table. It should be noted that only one task state from each task table is to be assigned to be active at any time.

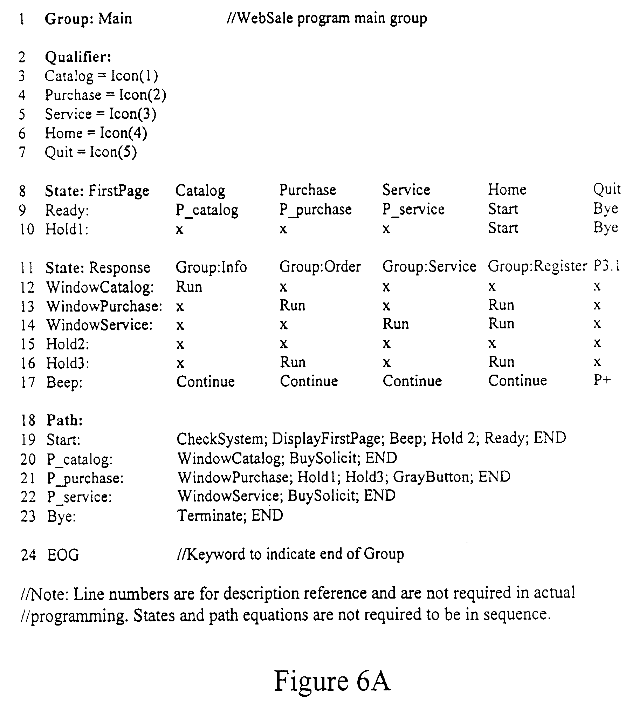

With reference to Figure 6A, a main group of table format program is demonstrated. The program is named as "WebSale" which provides a skeleton structure of a sales program to be provided through the internet. This example illustrates the concept of multiple language programming in the table format programming environment. The line numbers of the program are only inserted to facilitate the description of the embodiment. It should be noted that the states and path equations are not required to be in sequence. Attention is now drawn to line 1. A keyword "Group" indicates the starting of a table format group or program module. The name of the group is "Main". Main is assigned as a keyword to indicate that this group is the first group of programs to be executed when the program starts to run. Line 2 starts with a keyword "qualifier" which defines the qualified conditions of the qualifiers listed in a configuration state. In lines 3 to 6, the term "Icon" applies to a functional command which constructs an icon and provides a trigger to the configuration state when this icon is clicked. In a typical arrangement of table format programming icons are numbered serially. Each icon is defined and named in the qualifier table. As an example, when Icon(1) is equated to the name "Catalog", the word "Catalog" is assigned and displayed to the first icon. In fact, once a name is assigned to an icon, the number it carries is immaterial unless the term "icon(n)" is mentioned in a program and "n" is a result of a computation. Line 8 defines an input states configuration table named "FirstPage". There are five qualifiers assigned in this table namely "Catalog", "Purchase", "Service", "Home" and "Quit". Each qualifier refers to the trigger of an icon as defined in the qualifier table of line 2. The first input qualifier state is named "Ready" as in line 9. In this state, when a qualified trigger representing the icon "Catalog" is received, the path named "P_catalog" is executed and similarly for the other qualifiers. The other input configuration state is named "Hold1" as indicated in line 10. An "x" in the state equation indicates that the corresponding qualifying condition is in a "don't care" condition, for which a trigger is blocked or no response is required when a qualified trigger comes in.

Attention is now drawn to line 11 of Figure 6A which provides another configuration table named "Response". It is an output states configuration table with five elements. The first four elements, with a keyword "Group:", indicate a program composed as a group. The name of the group is assigned following a colon sign. The first group is named "Info" which provides product information. The second group "Order" is a program which guides the user through a purchasing process such as registering a credit card number, product number, order quantity, total amount, options, then encrypts the data and sends the order to the supplier for decoding. The third group "Service" provides general interactive customer service facilities. The fourth group "Register" registers the customer information. The last element of the output configuration is a hardware port P3.1 which connects to a speaker of the computing device. When a code P+ is assigned to this port, a burst of positive going pulses is sent to the speaker and a beep tone is heard. Port P3.1 is a hardware terminal and is therefore classified as an hardware oriented output. All the first four groups are software oriented output conditions and are classified as virtual computing outputs. Any output condition not related to a hardware output terminal is defined as a virtual computing output The definition of virtual computing output includes any non-terminal related activity which generates data, displays or produces signals or information, initiates a program, resets a program, starts a software timer or counter, or manipulates an internal circuitry such as a register etc. Lines 12 to 17 are the output states configured under the state table "Response". When a "Run " command appears in an output configuration state, the corresponding group program is run. When a "Continue" instruction is received, a running program continues to run or the program remains idle if it had not yet been started or is in a pause condition. The "x" sign indicates no output action is required. With all these descriptions, the action of the output states in lines 12 to 17 are self explanatory. It should be noted that more than one input or output state table may be present in a program. Multiple state tables simplify the structure of the tables and make the programming job easier. However, it should be noted that only one of the configuration states of every input state table should be specified to be active at a time. As a programming trick, the interrelated inputs qualifiers and output conditions can be combined to form a state table. It should also be noted that input states and output states can also be combined to form a mixed state if desired.

Line 18 starts the action "Path(s)". Each path defines one or more actions to be executed when the path name is recited in any qualifier element of a configuration state. Line 19 is a path named "Start" which is the default starting path when the Group is executed. The programming procedure starts by reciting the desired action when the program is first started. The starting action "CheckSystem" checks the configuration of the local computing system such as the display drivers, physical port to drive the speaker and the system resources available to run the program. The resources available in the local computing devices to be evaluated include the computer time, number of registers, amount of memory available, memory configuration, timer and counters occupied, interrupt channels available and any specific hardware circuit configuration. Included in the "CheckSystem" action should be a procedure to reconfigure the downloaded program according to the parameters of the system. The next step is to display the first page. This action is simply defined as "DisplayFirstPage" in the program. A "Beep" sound is then generated. "Hold2" indicates all output configurations are put on hold as directed by the "Response" state table. The "Ready" instruction initiates the "Ready" state of the input state table "FirstPage". During the "Ready" state, whenever a qualified trigger of the icons "Catalog", "Purchase" or "Service" is received, one of the corresponding paths 20 to 22 is executed. In each of these paths, a window directing the action is displayed and a further sales promotion program can be started. "BuySolicit" is an interactive program to solicit sales of the company products. During the path "P_purchase", the actions "Hold1" and "Hold3" limit the response allowable from the local user terminal to the icons "Home" and "Quit". The "GreyButton" is an action to change the color of the icons which are disabled such as the icons "Catalog", "Purchase" and "Service" as directed by the state command "Hold1". When the path "Bye", line 23 is executed, the program "Terminate" runs and the program is ended. A keyword "EOG", which means "End Of Group" is placed at the end of the group to inform the compiler that the program group ends here.

It can be observed that the programming method discussed interactively describes the activities of the program according to the composed states and paths. Meaningful programmer-assigned terms such as "Beep", "CheckSystem" and "Terminate" are used. This procedure is as natural as writing an essay precisely to describe the actions required by the program.

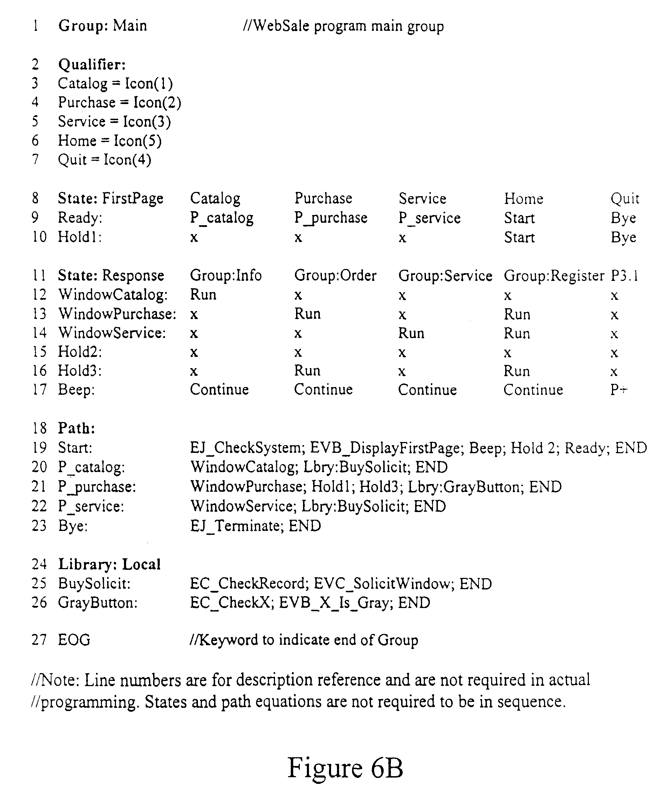

In compiling this program, many programmer-assigned terms remain unidentified such as "CheckSystem", "DisplayFirstPage" and "BuySolicit". All these programmer-assigned labels are not executable by the computing device unless they are further linked to an executable program. A next step demonstrated in Figure 6B is then required to further define the description of the unidentified labels. Typical methods to make these labels executable is to link them to an external executable program or further define the label with a program derived from a library. It is very desirable that the compiler provides a function to identify all programmer-assigned labels. The identification is preferably distinguishable when the program is printed by a black and white printer. Typical preferable identification methods include a change of case styles, and font style such as bold, italic, or underline. The requirement of each of the unidentified labels is then analyzed and a most appropriate programming language is selected to compose a program to provide the desirable action.

The supporting programs can be written in any languages or even by another table format program. These supporting programs are then "Included" in the program for the compiler to put the programs together. Line 19 of Figure 6B indicates that the "CheckSystem" is preferably a program written in Java, as denoted by the prefix "EJ", where "E" means it is an external program to be included. The action "DisplayFirstPage" is preferably written in Visual Basic. In line 20, the action "BuySolicit", a window to solicit purchasing is preferably derived from a local or global library. Line 24 indicates the starting of the local library. Line 25 is a further elaborated path equation which describes the action to solicit the customers. This action includes executing an external program "CheckRecord" written in "C" and a program named "SolicitWindow" written in Visual C++ to interactively solicit the customer to buy products. The element "GrayButton" in line 21 refers to a path positioned in the local library which comprises a "C" program to identify which icon is assigned an "x" and then another program written in Visual Basic to turn these icons into a gray color to indicate that these icons cannot be triggered.

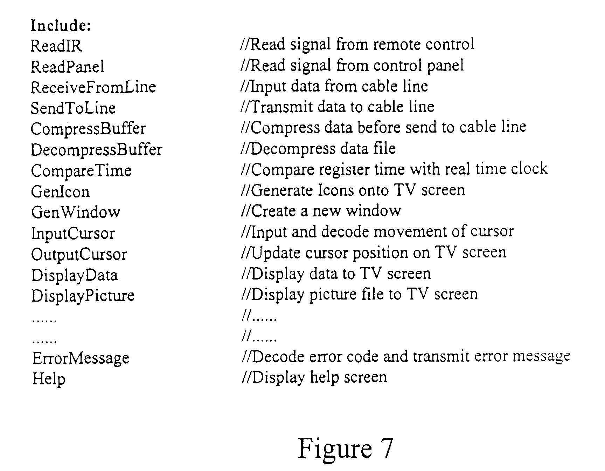

When an abundant library of supporting programs is built up, a programmer familiar with table format programming may start the programming job by selecting and including various common supporting programs. Figure 7 indicates an exemplary include table when a program involving windows and a transceiver is to be composed. The supporting programs in this include table are mandatory and therefore it is desirable for the compiler to outline any included program not being used in the composed program.

There are more technical requirements to make use of the table format programming method to administrate the supporting programs written in other languages, such as the method to pass parameters and equate variables between the programs. Proper management of the different types of program must also be considered, especially if they are to be translated by different compilers. Those skilled in the art will appreciate the advantages provided by the table format programming method disclosed and be able to set up a compiling system to complete the actions required. For example, predefined registers or memory blocks may be assigned to handle passing of a parameter when a particular external program is included.

Attention is now drawn to the following major advantages of table format programming summarized from the teaching of the above demonstrated examples:
1. The program can be composed easily by writing descriptive labels.
2. The program is well-structured so that the chance of incorporating program bugs is small.
3. It is simple for hardware terminals to be combined with virtual software outputs and interact with sophisticated program flow.
4. The table format program provides a clean-cut presentation and can easily be read by any third party. The user-friendly presentation and the clarity provided are important to further reduce program debug time and also minimize future maintenance cost.
5. The table format programming method offers great simplicity to structure a program by making use of multiple languages. These languages are selected according to the application environment and features offered by each language.
6. The concise program written in table format provides a high data compression ratio and makes the program ideal for transmission from a remote host terminal to a local computing device through a communication channel of limited bandwidth and data handling rate.

The preferred embodiments of the invention described herein are exemplary, and numerous modifications, specification variations, table rearrangements, instruction and keyword assignments can be readily envisioned to achieve an equivalent result, all of which are intended to be embraced within the scope of the appended claims.

## Claims

1. A programming tool for programming a computing device (803) comprising a first table (113) having a first plurality of configuration states, at least one of said configuration states defining one or more qualifying conditions;
a second table (116) specifying a second plurality of paths, at least one of said paths being executed when a qualifying condition listed in said first table is satisfied; and one of said configuration states being specified as an active state; characterised in that said tool further comprises one or more of the following elements or characteristics:
(1) at least one of said configuration state comprising a virtual qualifier;
(2) at least one of said second plurality of paths having one or more labels, wherein each label represents an executable program;
(3) one or more further tables (103,200) specifying user-defined custom expressions to represent corresponding predefined instructions of a programming language;
(4) said computing device (803) being a remote computer connecting to a local computing device (801) through a communication link (802); wherein the digital data representing said first and second tables is stored in said remote computing device (803) for downloading to said local computing device (801) through said communication link;
(5) said computing device (803) comprising at least a first processor and a second processor; wherein said first processor is configured to translate the relationship between said first and second tables and to give direction to the second processor to execute other programs;
(6) at least one of said configuration states comprising a label and said label being equated with a separate expression defining the qualifying condition represented by said label;
(7) a table (104) defining a preferable style of keywords;
(8) a table (105) having a third plurality of task states to define the activity of a fourth plurality of tasks;
(9) a table (114) defining a fifth plurality of output expressions, each output expression representing an output condition of a configuration state or a path element listed in said second table (116).
(10) a further state table defining a sixth plurality of configuration states and a further path table defining a seventh plurality of paths; wherein said first and second tables are grouped as a first table group to perform a first function, said further state and path tables are grouped as a second table group to perform a different second function.

2. The tool of claim 1 wherein at least one of the task states specifies selected tasks to be active.

3. The tool of claim 1 or 2 wherein at least one of said task states specifies the priority of the tasks to be serviced.

4. The tool of claim 1 wherein the first table group comprises instruction to initiate execution of the second table group.

5. The tool of claim 1 or claim 4 further configured to compile the interaction between said first and second table groups.

6. The tool of claim 1 wherein the communication link (802) is a network.

7. The tool of claim 6 wherein said network comprises one of an internet, intranet, extranet, LAN, ISDN, DSL or any communication method connecting two or more computing devices.

8. The tool of claims 6 or 7 further configured to evaluate the architecture of said remote computing device (803) and to configure the aforementioned elements to work with the architecture of said remote computing device.

9. The tool of claims 6, 7 or 8 further configured to store digital data representing said configuration states and paths into said remote computing device (803) for execution thereof.

10. The tool of claim 1 further comprising a table defining qualifying expressions, each qualifying expression representing a qualifying condition of a configuration state.

11. The tool of claim 1 wherein the one or more labels is not initially executable by said computing device (803) until it is equated with said executable program or said expression.

12. The tool of claim 11 wherein said one or more labels represents a program composed with any available programming language.

13. The tool of claim 11 or 12 further comprising means to pass parameters between the first table, the second table and the executable program represented by the label.

14. The tool of claims 11, 12 or 13 further configured to link said one or more labels with said program represented by said label.

15. The tool of claim 1 further providing choice to display the composed program with said user-defined custom expressions or with said corresponding predefined instructions of a programming language.

16. The tool of claim 1 comprising a first user table (200) to define custom expressions of a first user and a second user table to define custom expressions of a second user, said tool further configured to translate a program having the first user table into corresponding expressions defined by the second user table or into the corresponding predefined instructions of any available programming language.

17. The tool of claim 1, claim 15 or claim 16 wherein a custom user-defined expression is highlighted.

18. The tool of any preceding claims, wherein the table format program further directs an element of a path to a program written with a programming language not of table format.

19. The tool of any preceding claims, wherein the table format program further specifies the resources of said computing device (803) required to service the states and paths thereof.

20. The tool of claim 19 wherein the resources required to service the states and paths are provided by the first processor.

21. The tool of claim 1 wherein the second processor services programs not in table format.

22. The tool of claim 1 wherein the second processor is configured to execute a program as directed by a table format program executed by said first processor.

23. The tool of claim 20, 21 or 22 wherein said first and second processors are included in a single integrated circuit.

24. The tool of any of claims 20, 21, 22 and 23 wherein at least one instruction executable by the first processor is different from the instruction set executable by the second processor.

25. The tool of any preceding claims further configured to carry out the following steps:
(a) identify a first region representing the configuration states;
(b) identify a second region representing the paths,
(c) identify at least one qualifying condition of a configuration state and link the configuration state to the path specified; and
(d) link a configuration state to a path quoting said configuration state as its element.

26. The tool of claim 25 further configured to integrate the function of steps (a) to (d) into a compiler of an existing language.

27. The tool of any preceding claim, wherein one or more output conditions is defined in at least one of said configuration states.

28. The tool of any preceding claim, further configured to provide a translation process carried out by an editor, a compiler, an interpreter or a translation program to translate at least part of the specifications of said tables into any available programming languages, including machine code digital data executable by said computing device.

29. The tool of claim 28 further comprising a debug tool configured to identify the location of the transformed program corresponding to the particular location of said tables.

30. The tool of any preceding claim further characterised in that the elements in one of the tables are not in sequential relationship to each other.

31. The tool of any preceding claims further comprising memory means storing data representing said tables.

32. The tool of claim 31 wherein said data is downloaded to said computing device for the execution thereof

33. The computing device recited in claim 32 characterised to have memory means storing data representing said tables.

34. An article of sale comprising the computing device of claim 33.
